(19) Europäisches Patentamt
European Patent Office
Office européen des brevets

(11) Veröffentlichungsnummer: **0 141 359**
**B1**

# (12) EUROPÄISCHE PATENTSCHRIFT

(45) Veröffentlichungstag der Patentschrift: **16.12.87**

(51) Int. Cl.⁴: **C 09 B 19/02**

(21) Anmeldenummer: **84112713.7**

(22) Anmeldetag: **22.10.84**

## (54) Verfahren zur Herstellung von Triphendioxazinverbindungen.

(30) Priorität: **04.11.83 DE 3339923**

(43) Veröffentlichungstag der Anmeldung: **15.05.85 Patentblatt 85/20**

(45) Bekanntmachung des Hinweises auf die Patenterteilung: **16.12.87 Patentblatt 87/51**

(84) Benannte Vertragsstaaten: **CH DE FR GB LI**

(56) Entgegenhaltungen:
**EP-A-0 141 996**
**DE-C-639 909**
**DE-C-725 288**
**GB-A-1 589 915**
**GB-A-2 026 014**

**P. PASCAL: "Nouveau traité de chimie minérale", Band 16, Seiten 489-490, 1960, Masson et cie, Paris, FR;**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl- Rumpff- Strasse 37, D-5090 Leverkusen 1 (DE)**

**EP 0 141 359 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein neues Verfahren zur Herstellung von Triphendioxazinverbindungen.

Es ist bekannt, daß man Triphendioxazinverbindungen durch Cyclisierung von 2,5-Diarylaminobenzochinon mit Kondensationsmitteln wie Schwefelsäure und Oleum herstellen kann. Es wird jedoch häufig beobachtet, daß besonders bei sulfogruppenhaltigen Arylaminoverbindungen diese Cyclisierung schwierig zu bewerkstelligen ist und daß höhere Temperaturen und höherprozentiges Oleum notwendig ist, wobei der Arylkern gegebenenfalls sulfiert werden kann.

Es wurde nun gefunden, daß der Zusatz von Jod oder einer anorganischen Jodverbindung die Cyclisierung von 2,5-Diarylaminobenzochinon in Oleum bei deutlich niedrigeren Temperaturen ermöglicht. Als anorganische Jodverbindungen seien folgende erwähnt:

Natrium- und Kaliumjodid, Natrium- und Kaliumjodat, Natrium- und Kaliumperjodat und Jodwasserstoffsäure. pro Mol 2,5-Diarylaminobenzochinon werden 0,01 bis 0,3, vorzugsweise 0,05 bis 0,2 Mol Jod oder anorganische Jodverbindung eingesetzt. Das verwendete Oleum enthält 10 bis 50 Gewichtsprozent, vorzugsweise 20 bis 40 Gew.-% an Schwefeltrioxid und die Reaktion wird bei 0 bis 40° C, vorzugsweise bei 10 bis 30° C ausgeführt.

Als Beispiele für erfindungsgemäß als Ausgangsverbindungen einsetzbare 2,5-Diarylaminobenzochinonverbindungen seien Verbindungen der allgemeinen Formel (1) erwähnt:

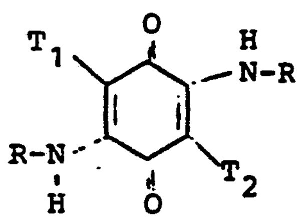

(1)

worin

$T_1$, $T_2$ = unabhängig voneinander H, Cl, Br, $C_1$-$C_4$-Alkoxy, $C_1$-$C_1$-Alkyl, gegebenenfalls substituierter Phenyl- oder Phenoxyrest

R = gegebenenfalls substituiertes Phenyl, Naphthyl, Carbazolyl oder Fluorenyl.

Substituenten der gegebenenenfalls substituierten Phenyl- oder Phenoxyreste $T_1$ und $T_2$ sind zum Beispiel Cl, $CH_3$, $C_2H_5$, $OCH_3$ und $OC_2H_5$.

Substituenten des Restes R können beispielsweise folgende sein:

Alkyl, wie Methyl, Ethyl, n-Propyl, n-Butyl-, Cyclohexyl, Alkoxy, wie Methoxy, Ethoxy, Isopropoxy, Cyclohexyloxy, Fluor, Chlor, Brom, Carboxy, Sulfo, Sulfamoyl, Acylamino, wie Acetylamino, Propionylamino, Ureido, Benzoylamino, Amino, Alkylamino, wie Methylamino, Ethylamino, β-Aminoethylamino, γ-Aminopropylamino, β-Sulfoethylamino, β-Sulfatoethylamino, β-Oxyethylsulfonyl, Aryloxy, wie Phenoxy, Arylamino, wie Anilino, Benzylamino, Cyclohexylamino, Arylthio, Phenyl, Benzyl, Phenylureido.

Die hier aufgeführten Alkyl-, Benzyl- und Phenylreste können selbst noch weiter substituiert sein, z.B. durch $NH_2$, $NHCH_3$, $OCH_3$, $OC_2H_5$, $SO_3H$, COOH, $NHCOCH_3$, Cl, Br, $-NHSONH_2$, OH, $SCH_3$, $SO_2NH_2$, $CONH_2$, $N^+(CH_3)_3$, $SO_2CH_2CH_2OSO_3H$.

Aus der Fülle der in Frage kommenden Reste R seien folgende beispielhaft erwähnt:

4-Amino-3-sulfophenyl
3-Amino-4-sulfophenyl
4-(4'-Amino-3'-sulfoanilino)-3-sulfophenyl
4-(3'-Amino-4'-sulfoanilino)-3-sulfophenyl
4-(2'-Aminoethylamino)-3-sulfophenyl
4-(3'-Aminopropylamino)-3-sulfophenyl
4-(4'-Aminocyclohexylamino)-3-sulfophenyl
4-Ethylamino-3-sulfophenyl
4-β-Oxyethylamino-3-sulfophenyl
4-β-Methoxyethylamino-3-sulfophenyl
6-Amino-1,5-disulfonaphthyl-3
4-Benzylamino-3-sulfophenyl
4-Phenoxy-3-sulfophenyl
4-(2'-Aminoethylamino)-3-(2'-sulfoethylsulfamoyl)-phenyl
4-(2'-Sulfoethylamino)-3-(2'-aminoethylsulfamoyl)-phenyl
4-Ethoxy-3-(2'-Oxyethylsulfonyl)-phenyl
4-Methoxy-3-(2'-Sulfatoethylsulfonyl)-phenyl.

Bei der Ausführung der Reaktion hat es sich als vorteilhaft erwiesen, die zur Anwendung kommenden 2,5-Diarylaminobenzochinone im Gemisch mit einem inerten Material in das Oleum einzutragen.

Als inerte Materialien kommen Kieselgur, Quarzsand, fein gemahlener Ton, Aluminiumoxid u.a. in Frage.

Besonders bevorzugt sind als Ausgangsmaterial Verbindungen der Formel (1), in denen $T_1$ und $T_2$ = Cl.

Das Aufarbeiten des bei der Cyclisierungsreaktion erhaltenen Reaktionsproduktes erfolgt nach an sich bekannten Methoden. Im einzelnen sei auf die Angaben im Herstellungsbeispiel verwiesen.

Die sulfogruppenhaltigen Triphendioxazinfarbstoffe können zum Färben von Wolle oder synthetischen Polyamiden verwendet werden, während diejenigen, die noch zusätzlich Aminogruppen enthalten, durch Acylierung z. B. mit Di- oder Trihalogentriazinen oder Di-, Tri- oder Tetrahalogenpyrimidinen in Reaktivfarbstoffe überführt werden können.

**Beispiel**

23,75 g 2,5-Bis-[4-(2-aminoethylamino)-3-β-sulfoethyl-sulfoamoyl-phenylamino]-3,6-dichlorbenzochinon werden mit 10 g Kieselgur innig vermischt und in 40 Minuten unter gutem Rühren bei 20 bis 30° C in ein Gemisch aus 40 ml 20 %-igem und 30 ml 65 %-igen Oleum eingetragen. Bei 20° C werden 0,5 g Kaliumjodid zugesetzt. Man rührt 45 Minuten bei 20 bis 23° C und läßt dann die Schmelze in 500 g Eis und 100 ml Wasser einlaufen, so daß die Temperatur nicht über 10° steigt. Man saugt den Niederschlag ab, wäscht ihn mit 100 ml Wasser aus und trägt ihn dann in 500 ml Wasser ein. Der Farbstoff wird mit Natronlauge gelöst (pH 12), geklärt und mit Salzsäure auf pH 7 gestellt. Nach dem Absaugen und Trocknen erhält man 21 g eines blauen Triphendioxazin-Farbstoffpulvers.

**Patentansprüche**

1. Verfahren zur Herstellung von Triphendioxazinverbindungen, dadurch gekennzeichnet, daß man eine 2,5-Diarylaminobenzochinonverbindung mit Oleum in Gegenwart von Jod oder einer anorganischen Jodverbindung behandelt.

2. Verfahren nach Anspruch 1, dadurch gekennzeichnet, daß man als anorganische Jodverbindung Natrium- oder Kaliumjodid oder Natrium- oder Kaliumjodat verwendet.

3. Verfahren nach Anspruch 1 und 2, dadurch gekennzeichnet, daß man pro Mol 2,5-Diarylaminobenzochinon 0,01 bis 0,3 Mol Jod oder anorganische Jodverbindung verwendet.

4. Verfahren nach Anspruch 1 bis 3, dadurch gekennzeichnet, daß man pro Mol 2,5-Diarylaminobenzochinon 0,05 bis 0,2 Mol Jod oder anorganische Jodverbindung verwendet.

5. Verfahren nach Anspruch 1 bis 4, dadurch gekennzeichnet, daß man Oleum einsetzt, welches 10 bis 50 Gewichtsprozent Schwefeltrioxid enthält.

6. Verfahren nach Anspruch 1 bis 5, dadurch gekennzeichnet, daß man Oleum einsetzt, welches 20 bis 40 Gewichtsprozent Schwefeltrioxid enthält.

7. Verfahren nach Anspruch 1 bis 6, dadurch gekennzeichnet, daß man die Reaktion bei 0 bis 40° C durchführt.

8. Verfahren nach Anspruch 1 bis 7, dadurch gekennzeichnet, daß man die Reaktion bei 10 bis 30° C durchführt.

9. Verfahren nach Anspruch 1 bis 8, dadurch gekennzeichnet, daß man die Reaktion in Gegenwart inerter Materialien durchführt.

10. Verfahren nach Anspruch 1 bis 9, dadurch gekennzeichnet, daß man 2,5-Diarylaminobenzochinone der Formel

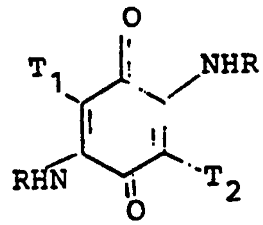

einsetzt, worin $T_1$, $T_2$ = unabhängig voneinander H, Cl, Br, $C_1$-$C_4$-Alkyl, $C_1$-$C_4$-Alkoxy, gegebenenfalls substituierter Phenyl- oder Phenoxyrest

R = gegebenenfalls substituiertes Phenyl, Naphthyl, Carbazolyl oder Fluorenyl.

**Claims**

1. Process for the preparation of triphendioxazine compounds, charactcrised in that a 2,5-diarylaminobenzoquinone compound is treated with oleum in the presence of iodine or an inorganic iodine compound.

2. Process according to Claim 1, characterised in that the inorganic iodine compound used is sodium or potassium iodile or sodium or potassium iodate.

3. Process according to Claim 1 and 2, characterised in that 0.01 to 0.3 mole of iodine or an inorganic iodine compound is used per mole of 2,5-diarylaminobenzoquinone.

4. Process according to Claim 1 to 3, characterised in that 0.05 to 0.2 hole of iodine or an inorganic iodine compound is used per mole of 2,5-diarylaminobenzoquinone.

5. Process according to Claim 1 to 4, characterised in that oleum containing 10 to 50 % by weight of sulphur trioxide is employed.

6. Process according to Claim 1 to 5, characterised in that oleum containing 20 to 40 per cent by weight of sulphur trioxide is employed.

7. Process according to Claim 1 to 6, characterised in that the reaction is carried out at 0 to 40° C.

8. Process according to Claim 1 to 7, characterised in that the reaction is carried out at 10 to 30° C.

9. Process according to Claim 1 to 8, characterised in that the reaction is carried out in the presence of inert materials.

10. Process according to Claim 1 to 9, characterised in that 2,5-diarylaminobenzoquinones of the formula

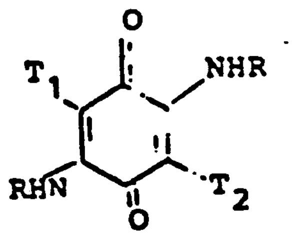

are used, wherein

$T_1$ and $T_2$ independently of one another are H, Cl, Br, $C_1$-$C_4$-alkyl, $C_1$-$C_4$-alkoxy or an optionally substituted phenyl or phenoxy radical and

R is optionally substituted phenyl, naphthyl, carbazolyl or fluorenyl.

## Revendications

1. Procédé pour la fabrication de triphénodioxazines,
caractérisé en ce que l'on traite une 2,5-bis-arylaminobenzoquinone par l'oléum en présence d'iode ou d'un composé inorganique d'iode.

2. Procédé selon la revendication 1, caractérisé en ce que l'on utilise comme composé inorganique d'iode l'iodure de sodium ou de potassium ou l'iodate de sodium ou de potassium.

3. Procédé selon les revendications 1 et 2, caractérisé en ce que l'on utilise 0,01 à 0,3 mole d'iode ou de composé inorganique d'iode par mole de 2,5-bis-arylaminobenzoquinone.

4. Procédé selon les revendications 1 à 3, caractérisé en ce que l'on utilise 0,05 à 0,2 mole d'iode ou de composé inorganique d'iode par mole de 2,5-bis-arylaminobenzoquinone.

5. Procédé selon les revendications 1 à 4, caractérisé en ce que l'on utilise de l'oléum qui contient 10 à 50 % en poids de trioxyde de soufre.

6. Procédé selon les revendications 1 à 5, caractérisé en ce que l'on utilise de l'oléum qui contient 20 à 40 % en poids de trioxyde de soufre.

7. Procédé selon les revendications 1 à 6, caractérisé en ce que l'on met en oeuvre la réaction à 0-40° C.

8. Procédé selon les revendications 1 à 7, caractérisé en ce que l'on met en oeuvre la réaction à 10-30° C.

9. Procédé selon les revendications 1 à 8, caractérisé en ce que l'on met en oeuvre la réactionen présence de matières inertes.

10. Procédé selon les revendications 1 à 9, caractérisé en ce que l'on utilise des 2,5-bis-arylaminobenzoquinones de formule:

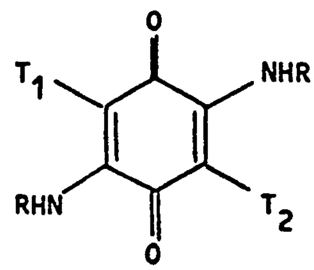

dans laquelle

$T_1$ et $T_2$ représentent chacun indépendamment l'un de l'autre H, Cl, Br ou un reste alkyle en $C_1$-$C_4$, alcoxy en $C_1$-$C_4$, phényle ou phénoxy éventuellement substitué,

R représente un reste phényle, naphtyle, carbazolyle ou fluorényle éventuellement substitué.